(19) Europäisches Patentamt
European Patent Office
Office européen des brevets

(11) **EP 3 346 234 A1**

(12) **EUROPEAN PATENT APPLICATION**
published in accordance with Art. 153(4) EPC

(43) Date of publication:
**11.07.2018 Bulletin 2018/28**

(51) Int Cl.:
***G01C 21/02*** *(2006.01)*

(21) Application number: **16880375.7**

(86) International application number:
**PCT/CN2016/082171**

(22) Date of filing: **16.05.2016**

(87) International publication number:
**WO 2017/113567 (06.07.2017 Gazette 2017/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.12.2015 CN 201511004962**

(71) Applicant: **Shanghai Institute of Satellite Engineering**
**Shanghai 200240 (CN)**

(72) Inventors:
• **ZHANG, Wei**
  **Minhang District, Shanghai 200241 (CN)**
• **CHEN, Xiao**
  **Shanghai 200241 (CN)**
• **YOU, Wei**
  **Shanghai 200241 (CN)**
• **HUANG, Qinglong**
  **Shanghai 200241 (CN)**

(74) Representative: **Sun, Yiming**
  **HUASUN Patent- und Rechtsanwälte**
  **Friedrichstraße 33**
  **80801 München (DE)**

(54) **AUTONOMOUS NAVIGATION METHOD FOR MARS PROBE**

(57) The invention provides an autonomous navigation method of Mars probe. The method comprises the following steps: according to the position relationship of the probe in the solar system, selecting the sun, the earth and the sun, Mars as the observed objects, acquiring the angle information, and establishing the position, velocity and other navigation parameters with the extended Kalman filter (EKF). The invention has the advantages of simple principle and low system resource requirements; it is a new method of autonomous celestial navigation of the Mars probe. The method expands the spacecraft navigation means, improves the navigation ability, and can be directly applied to the future autonomous navigation mission of Mars exploration in China; therefore, it has a wide range of applications in the field of deep space exploration.

FIG. 1

EP 3 346 234 A1

**Description**

**TECHNICAL FIELD**

The invention relates to the technical field of celestial navigation in the Mars exploration cruise phase, in particular to an autonomous navigation method of Mars probe.

**BACKGROUND OF THE INVENTION**

For the cruising flight in interplanetary space, the Mars probe has the characteristics of long flight distance, many unknown factors of the flight environment, complex flight program, great probe-earth communication delay and loss, etc. It puts forward higher requirements for the autonomous navigation ability.

Currently, the commonly used autonomous navigation method is mainly based on the optical navigation of asteroids or Mars. However, for Mars exploration missions, the number of available navigation asteroids may not meet the mission requirements due to the limited number of near-earth asteroid and the constraints of the observation screening criteria. In addition, the ephemeris information of asteroids obtained through observation has large errors, so that the navigation scheme meeting the navigation accuracy requirements cannot be obtained.

**SUMMARY OF THE INVENTION**

In view of the defects in the prior art, an object of the invention is to provide an autonomous navigation method of Mars probe.

According to one aspect of the invention, an autonomous navigation method of Mars probe is provided, wherein the method comprises the following steps:

(1) Taking the spatial position and velocity of the probe in the $J$2000 heliocentric-ecliptic inertial coordinate system as the state vector $X(t)$ of the navigation system, wherein the calculation formula of the vector $X(t)$ is as follows:

$$X\left(t\right) = \left[ x, y, z, v_x, v_y, v_z \right]^{\mathrm{T}}$$

(2) In the heliocentric inertial coordinate system, determining the state equation:

$$\dot{X}\left(t\right) = f\left(X\left(t\right), t\right) + w\left(t\right)$$

Where, $w(t)$ represents state model noise;

(3) Obtaining the unit vectors $\widetilde{nR_{ps}}$ and $\widetilde{nR_{pm}}$ of the sun and Mars relative to the sight direction of the probe through the navigation sensor and sun sensor;

(4) Taking the observed value $Z$ for $R_{sp}$, and establishing an observation equation as follows:

$$Z = h\left(X\right) + v\left(t\right)$$

Where, the observation error is $v\left(t\right) = \dfrac{\partial R_{mp}}{\partial nR_{sp}} v_{sp} + \dfrac{\partial R_{mp}}{\partial nR_{ep}} v_{ep}$ ;

(5) Based on the state equation and the observation equation, selecting the filtering method based on the linearization of the filter value to estimate the state, and obtaining the real-time navigation parameters of the Mars probe.

Preferably, in step (3), the observation models of the sun and Mars relative to the sight direction of the probe are as follows:

$$\widetilde{nR_{ps}} = nR_{ps} + v_{ps}$$

$$\widetilde{nR_{pm}} = nR_{pm} + v_{pm}$$

Where, $v_{ps}$ and $v_{pm}$ are the sight vector observation noise.

Preferably, in step (4), in the heliocentric inertial coordinate system, according to the geometric relationship of the celestial sight vector:

$$\gamma = \arccos\left(nR_{ps} \cdot nR_{pm}\right)$$

$$\theta = \arccos\left(nR_{sm} \cdot nR_{pm}\right)$$

The position of the probe in the inertial system is as follows:

$$R_{sp} = -\frac{\|R_{sm}\|\sin\theta}{\sin\gamma} \cdot nR_{ps}$$

$$= -\|R_{sm}\|\sqrt{\frac{1-\left(\cos\theta\right)^2}{1-\left(\cos\gamma\right)^2}} \cdot nR_{ps}$$

Compared with the prior art, the invention has the following beneficial effects:
The invention does not rely on ground radio information, only needs to get the images of the sun and Mars. Combined with spacecraft attitude information, the autonomous navigation of spacecraft flight process can be realized; therefore, the invention is a highly-independent new navigation method, which is simple and easy to operate. Meanwhile, compared with the ground radio navigation method, the method of the invention has the obvious advantages and characteristics of no delay.

The invention has the advantages of simple principle and novel method; therefore, it expands the spacecraft navigation means to realize a real sense of spacecraft autonomous navigation, improves the navigation ability, and can be directly applied to the future autonomous navigation mission of Mars exploration in China. Furthermore, it has a wide range of applications in the field of deep space exploration.

## BRIEF DESCRIPTION OF THE DRAWINGS

Other features, objects, and advantages of the invention will become more apparent from reading the description of non-limiting embodiments detailed with reference to the following figures:

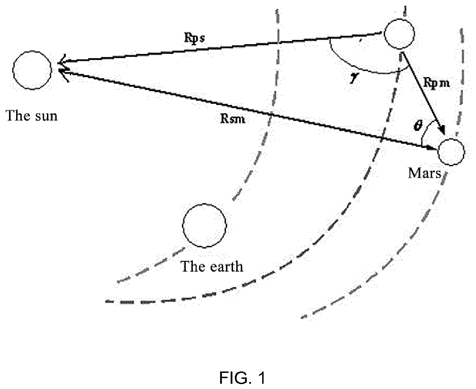

FIG. 1 is a schematic diagram of the method of the invention.

## DESCRIPTION OF THE PREFERRED EMBODIMENT

The invention is described in detail as follows with reference to specific embodiments. The following embodiments will help provide further understanding of the invention for those skilled in the art, and not in any way limit the invention. It shall be noted that several variants and improvements can be made without departing from concept of the invention for ordinary persons skilled in the art. All these fall within the protection scope of the invention.

The basic principle of the method is as follows: the spacecraft receives optical image signals from the sun and Mars by relaying on the sun sensor and Mars sensor carried; according to the image processing algorithm, the celestial sight vector parameters are calculated; combined with spacecraft attitude information and celestial ephemeris information, the velocity parameters of the spacecraft are obtained, and the position parameters of the spacecraft are obtained by integrating.

As shown in FIG. 1, it is a schematic diagram of autonomous navigation in the Mars exploration cruise phase, and the steps are as follows:

(1) Establishing a solar system inertial coordinate system OXYZ of the solar system, and selecting the spatial position and velocity as the state vector of the navigation system.

(2) Establishing the state equation according to the satellite orbital dynamics equation.

(3) Obtaining the unit vectors $\widetilde{nR_{ps}}$ and $\widetilde{nR_{pm}}$ of the sun and Mars relative to the sight direction of the probe through the navigation sensor and sun sensor.

(4) Establishing the observation equation according to the unit vectors $\widetilde{nR_{ps}}$ and $\widetilde{nR_{pm}}$ relative to the sight direction obtained in step (3).

(5) Based on step (3) and step (4), selecting the filtering method based on the linearization of the filter value to estimate the state, and obtaining the real-time navigation parameters of the Mars probe.

The detailed description of the method is as follows:

1. Taking the spatial position and velocity of the probe in the *J*2000 heliocentric-ecliptic inertial coordinate system as the state vector $X(t)$ of the navigation system, wherein it can be described as:

$$X\left(t\right)=\left[x,y,z,v_x,v_y,v_z\right]^{\mathrm{T}}$$

2. Establishing the state equation according to the satellite orbital dynamics equation. In the Mars exploration cruise phase, the effects of the celestial perturbation of the sun, the earth, Mars, etc., solar radiation pressure perturbation, correction thrust of the probe and so on are mainly considered. In the heliocentric inertial coordinate system, the general form is as follows:

$$\dot{\boldsymbol{r}}=\boldsymbol{v}$$

$$\ddot{\boldsymbol{r}}=-\frac{u_s}{r^3}\boldsymbol{r}+\sum_{i=1}^{N}\mu_i\left[-\frac{\boldsymbol{r}_i}{r_i^3}+\frac{\boldsymbol{r}_{si}}{r_{si}^3}\right]+\eta C_R\left(\frac{A_R}{m}\right)+\boldsymbol{a}_T$$

Thus, the orbital dynamics equation of the probe is expressed in the following general form

$$\dot{X}\left(t\right)=f\left(X\left(t\right),t\right)+w\left(t\right)$$

Where, $w(t)$ represents state model noise, which is generated treated by white Gaussian noise.

3. Obtaining the unit vectors $\widetilde{nR_{ps}}$ and $\widetilde{nR_{pm}}$ of the sun and Mars relative to the sight direction of the probe through the navigation sensor and sun sensor, wherein the observation models are as follows:

$$\widetilde{nR_{ps}}=nR_{ps}+v_{ps}$$

$$\widetilde{nR_{pm}} = nR_{pm} + v_{pm}$$

4. Taking the observed value $Z$ for $R_{sp}$, and establishing an observation equation as follows:

$$Z = -\|R_{sm}\| \sqrt{\frac{1-\left(nR_{sm} \cdot \widetilde{nR_{pm}}\right)^2}{1-\left(\widetilde{nR_{ps}} \cdot \widetilde{nR_{pm}}\right)^2}} \cdot \widetilde{nR_{ps}}$$

$$= -\|R_{sm}\| \sqrt{\frac{1-\left[nR_{sm} \cdot \left(nR_{pm} + v_{pm}\right)\right]^2}{1-\left[\left(nR_{ps} + v_{ps}\right) \cdot \left(nR_{pm} + v_{pm}\right)\right]^2}} \cdot \left(nR_{ps} + v_{ps}\right)$$

Ignoring the high-order small quantity in the observations, wherein the observation equation of the probe position vector obtained from the sight information of the sun and Mars can be expressed as:

$$Z = h(X) + v(t)$$

Where, the observation error is $v(t) = \dfrac{\partial R_{mp}}{\partial nR_{sp}} v_{sp} + \dfrac{\partial R_{mp}}{\partial nR_{ep}} v_{ep}$.

5. For the navigation system with the above-mentioned state equation and the observation equation, selecting the filtering method based on the linearization of the filter value to estimate the state, and obtaining the real-time navigation parameters of the Mars probe.

Specific embodiments of the invention are described above. It shall be understood that the invention is not limited to the above-mentioned specific embodiments, and those skilled in the art can make different variants and modifications within the scope of the claims, and it shall not affect the substance of the invention.

## Claims

1. An autonomous navigation method of Mars probe, wherein the method comprises the following steps:

   (1) Taking the spatial position and velocity of the probe in the $J2000$ heliocentric-ecliptic inertial coordinate system as the state vector $X(t)$ of the navigation system, wherein the calculation formula of the vector $X(t)$ is as follows:

   $$X(t) = \left[x, y, z, v_x, v_y, v_z\right]^{\mathrm{T}}$$

   (2) In the heliocentric inertial coordinate system, determining the state equation:

   $$\dot{X}(t) = f(X(t), t) + w(t)$$

   Where, $w(t)$ represents state model noise;

(3) Obtaining the unit vectors $\widetilde{nR_{ps}}$ and $\widetilde{nR_{pm}}$ of the sun and Mars relative to the sight direction of the probe through the navigation sensor and sun sensor;

(4) Taking the observed value $Z$ for $R_{sp}$, and establishing an observation equation as follows:

$$Z = h(X) + v(t)$$

Where, the observation error is $v(t) = \dfrac{\partial R_{mp}}{\partial nR_{sp}} v_{sp} + \dfrac{\partial R_{mp}}{\partial nR_{ep}} v_{ep}$ ;

(5) Based on the state equation and the observation equation, selecting the filtering method based on the linearization of the filter value to estimate the state, and obtaining the real-time navigation parameters of the Mars probe.

**2.** The autonomous navigation method of Mars probe according to claim 1, wherein in step (3), the observation models of the sun and Mars relative to the sight direction of the probe are as follows:

$$\widetilde{nR_{ps}} = nR_{ps} + v_{ps}$$

$$\widetilde{nR_{pm}} = nR_{pm} + v_{pm}$$

Where, $v_{ps}$ and $v_{pm}$ are the sight vector observation noise.

**3.** The autonomous navigation method of Mars probe according to claim 1, wherein in step (4), in the heliocentric inertial coordinate system, according to the geometric relationship of the celestial sight vector:

$$\gamma = \arccos\left(nR_{ps} \cdot nR_{pm}\right)$$

$$\theta = \arccos\left(nR_{sm} \cdot nR_{pm}\right)$$

The position of the probe in the inertial system is as follows:

$$R_{sp} = -\frac{\|R_{sm}\| \sin\theta}{\sin\gamma} \cdot nR_{ps}$$

$$= -\|R_{sm}\| \sqrt{\frac{1 - (\cos\theta)^2}{1 - (\cos\gamma)^2}} \cdot nR_{ps}$$

FIG. 1

# INTERNATIONAL SEARCH REPORT

| International application No. |
|---|
| PCT/CN2016/082171 |

### A. CLASSIFICATION OF SUBJECT MATTER

G01C 21/02 (2006.01) i

According to International Patent Classification (IPC) or to both national classification and IPC

### B. FIELDS SEARCHED

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNPAT, CNKI, WPI, EPODOC: zhang wei, mars, earth, navigat+, error, speed, angle, sun, state, vector, noise, state equation, observation equation, celestial bodies, sensor, heliocenter intertia, star, shanghai satellite, detector, measurement equation

### C. DOCUMENTS CONSIDERED TO BE RELEVANT

| Category* | Citation of document, with indication, where appropriate, of the relevant passages | Relevant to claim No. |
|---|---|---|
| X | CN 102175241 A (BEIHANG UNIVERSITY) 07 September 2011 (07.09.2011) description, paragraphs [0023]-[0025], [0058]-[0066] and [0113], the abstract, and figures 1-3 | 1-3 |
| X | CN 101672651 A (BEIHANG UNIVERSITY) 17 March 2010 (17.03.2010) description, pages 5-7, and figure 2 | 1-3 |
| X | CN 102168980 A (BEIHANG UNIVERSITY) 31 August 2011 (31.08.2011) description, pages 2-5, and figures 1 and 2 | 1-3 |
| A | CN 104764449 A (BEIHANG UNIVERSITY) 08 July 2015 (08.07.2015) the whole document | 1-3 |
| A | US 8532861 B1 (ANDOH, FUKASHI) 10 September 2013 (10.09.2013) the whole document | 1-3 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 June 2016 | 28 June 2016 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WANG, Haifeng Telephone No. (86-10) 010-62413550 |
|---|---|

Form PCT/ISA/210 (second sheet) (July 2009)

**INTERNATIONAL SEARCH REPORT**
Information on patent family members

| International application No. |
| --- |
| PCT/CN2016/082171 |

| Patent Documents referred in the Report | Publication Date | Patent Family | Publication Date |
| --- | --- | --- | --- |
| CN 102175241 A | 07 September 2011 | CN 102175241 B | 20 March 2013 |
| CN 101672651 A | 17 March 2010 | CN 101672651 B | 01 June 2011 |
| CN 102168980 A | 31 August 2011 | CN 102168980 B | 14 November 2012 |
| CN 104764449 A | 08 July 2015 | None | |
| US 8532861 B1 | 10 September 2013 | None | |

Form PCT/ISA /210 (patent family annex) (July 2009)